# EUROPEAN PATENT SPECIFICATION

(11) **EP 4 470 222 B1**
(45) Date of publication and mention of the grant of the patent: **11.03.2026**
(21) Application number: 23701099.6
(22) Date of filing: 18.01.2023
(51) Int. Cl.: H04N 25/40, H04N 25/46, H04N 25/618

(54) **SOLID STATE IMAGING DEVICE FOR ENCODED READOUT AND METHOD OF OPERATING**
FESTKÖRPERABBILDUNGSVORRICHTUNG FÜR CODIERTES AUSLESEN UND BETRIEBSVERFAHREN DAFÜR
DISPOSITIF D'IMAGERIE À SEMI-CONDUCTEURS POUR LECTURE CODÉE ET PROCÉDÉ DE FONCTIONNEMENT

(30) Priority: 25.01.2022 EP 22153225
(43) Date of publication of application: 04.12.2024
(73) Proprietor: Sony Semiconductor Solutions Corporation, Atsugi-shi, Kanagawa 243-0014 (JP); Sony Europe B.V., Weybridge, Surrey KT13 0XW (GB)
(72) Inventor: AN, Jae-Sung, 70327 Stuttgart (DE); KAWAZU, Naoki, 70327 Stuttgart (DE)
(74) Representative: Müller Hoffmann & Partner
(86) International application number: PCT/EP2023/051119
(87) International publication number: WO 2023/143982

(56) References cited:
- US-A- 5 905 818
- US-A1- 2014 285 625

## Description

The present disclosure relates to a solid state imaging device having pixel circuits suitable for a data-compressed readout method. More specifically, the disclosure relates to encoding pixel signals from pixel circuits associated with the same pixel column of a two-dimensional pixel array. The present disclosure further relates to a method of operating a solid state imaging device, in particular, to a data-compressed readout method.

### BACKGROUND

Active image sensors in solid-state imaging devices include photoelectric conversion elements that generate a photocurrent whose current rating is proportional to the received radiation intensity. In image sensors for intensity readout, a pixel circuit converts the small photocurrent generated by the photoelectric conversion element into a comparatively large pixel output signal, which a downstream analog-to-digital converter converts into a digital pixel value. Pixel circuits for event detection sensors such as Dynamic Vision Sensors (DVS) and Event-based Vision Sensors (EVS) respond to changes in light intensity and the image sensor provides information about the position and timing of such events in the imaged scene. The photoelectric conversions elements are usually arranged in a two-dimensional pixel array. Regardless of the pixel type and whether a global shutter or a rolling shutter is used for the exposure, pixel circuits of the intensity readout type are usually sequentially read out row by row. Some DVS solid state imaging devices can also be operated in a scanning mode that reads out the pixels row by row. The readout time per row and the number of rows result in the frame readout period required to read out one complete image ("frame") from the image sensor and the maximum frame rate at which complete images can be read out.

Document US 5 905 818 A describes an image sensor based on a two-dimensional pixel array of pixels arranged in N pixel columns and N pixel rows. Each pixel is assigned to a eight-transistor switching matrix. Each output line of a first block for generating and storing Walsh functions is connected to the switching matrices of all pixels of a different pixel column. Each output line of a second block for generating and storing Walsh functions is connected to the switching matrices of all pixels of a different pixel row. Via the first and second blocks generating and storing Walsh functions, the electric signal of a photodiode of each pixel circuit can be binary weighted. The weighted electric signal are added to obtain N x N coefficients of a Walsh-Hadamard transform representing the optical scene. In US 2014 / 0 285 625 A1, a machine vision system aggregates signals from multiple pixels. The aggregation is based on a sampling function. The sampling function is based on a sparse random basis and a filtering function.

With increasing number of pixel circuits in a pixel array, power consumption increases. Reducing power consumption by using lower operating voltages deteriorates the signal-to-noise ratio (SNR) for the pixel readout. Further, with increasing number of pixel rows, the frame readout period increases and the maximum frame rate decreases. Reducing readout time per pixel row may adversely affect the readout quality.

### SUMMARY

Nowadays, there is a constant need for solid-state imaging devices employing both high frame rates and high SNR for the image readout. The present disclosure has been made in view of the above circumstances, and it is therefore desirable to provide a solid-state imaging device facilitating high frame rates at high SNR for the image readout.

In this regard, the present disclosure relates to a solid state imaging device as defined in claim 1.

The solid state imaging device facilitates a method defined in claim 12.

The decoding restores a digital value of each single pixel signal. The encoding/decoding provides a CDMA (code division multiple access) for the pixel readout. Each column signal contains all original pixel signals. The averaging effect of the CDMA readout increases the SNR, wherein the magnitude of the effect depends on the code length. For example, for an SNR improvement as invoked with a binary spreading code of code length L=8, a conventional row-by-row readout needs eight repetitions of a complete frame readout. In other words, for achieving the same SNR as the method according to the present disclosure, the frame rate for a conventional row-by-row readout is only 1/8 of that for the CDMA readout.

The described embodiments, together with further advantages, will be best understood by reference to the following detailed description taken in conjunction with the accompanying drawings.

### BRIEF DESCRIPTION OF THE DRAWINGS

FIG. 1 is a simplified block diagram illustrating a configuration example of a solid-state imaging device that facilitates a CDMA encoded readout according to an embodiment of the present technology.
FIG. 2 is a simplified block diagram illustrating a configuration example of a solid-state imaging device according to an embodiment with one single data signal line per pixel column.
FIG. 3 is a simplified block diagram illustrating pixel circuits connected to the same data signal line according to an embodiment related to pixel circuits with integrated signal inverting circuit.
FIG. 4 is a simplified block diagram illustrating a configuration example of a solid-state imaging device according to an embodiment related to pixel arrays for intensity readout.
FIG. 5 is a simplified circuit diagram illustrating a booster circuit for a reference voltage and a pixel circuit with integrated signal inverting circuit according to another embodiment.
FIG. 6 is a simplified time diagram for internal signals of the pixel circuit of FIG. 5.
FIG. 7 is a simplified block diagram illustrating the encoding of pixel signals of a pixel array into column signals and the decoding of the column signals into the original pixel signals, in accordance with an embodiment of the present disclosure.
FIG. 8 is a simplified block diagram of a solid state imaging device for illustrating a readout method including the encoding of pixel signals of a pixel column into column signals and the decoding of the column signals into the original pixel signals, in accordance with an embodiment of the present disclosure.
FIG. 9 to FIG. 11 are simplified block diagrams illustrating different states of the readout method used in the block diagram of FIG. 8.
FIG. 12A and FIG. 12B schematically show different readout addressing codes for discussing effects of the embodiments of the present disclosure.
FIG. 13A and FIG. 13B schematically show different readout addressing codes in accordance with embodiments of the present disclosure.
FIG. 14 is a diagram showing an example of a laminated structure of a solid-state imaging device according to an embodiment of the present disclosure.
FIG. 15A and FIG. 15B schematically show different arrangements for elements of an image sensor assembly with RGB pixel patterns in accordance with further embodiments of the present disclosure.
FIG. 16 is a schematic circuit diagram of elements of an image sensor assembly formed on a second chip of a solid-state imaging device with laminated structure according to an embodiment.
FIG. 17 is a block diagram depicting an example of a schematic configuration of a vehicle control system.
FIG. 18 is a diagram of assistance in explaining an example of installation positions of an outside-vehicle information detecting section and an imaging section of the vehicle control system of FIG. 17.

### DETAILED DESCRIPTION

Embodiments for implementing techniques of the present disclosure will be described below in detail using the drawings. The techniques of the present disclosure are not limited to the described embodiments, and various numerical values and the like in the embodiments are illustrative only. The same elements or elements with the same functions are denoted by the same reference signs. Duplicate descriptions are omitted.

Connected electronic elements may be electrically connected through a direct, permanent low-resistive connection, e.g., through a conductive line. The terms "electrically connected" and "signal-connected" may also include a connection through other electronic elements provided and suitable for permanent and/or temporary signal transmission and/or transmission of energy. For example, electronic elements may be electrically connected or signal-connected through resistors, capacitors, and electronic switches such as transistors or transistor circuits, e.g. MOSFETs, transmission gates, and others.

The load path of a transistor is the controlled path of a transistor. For example, a voltage applied to a gate of a field effect transistor (FET) controls by field effect the current flow through the load path between source and drain of the FET.

Though in the following a technology for encoded pixel readout is predominantly described in the context of certain types of image sensors for intensity readout, the technology may also be used for other types of image sensors, e.g., EVS and DVS.

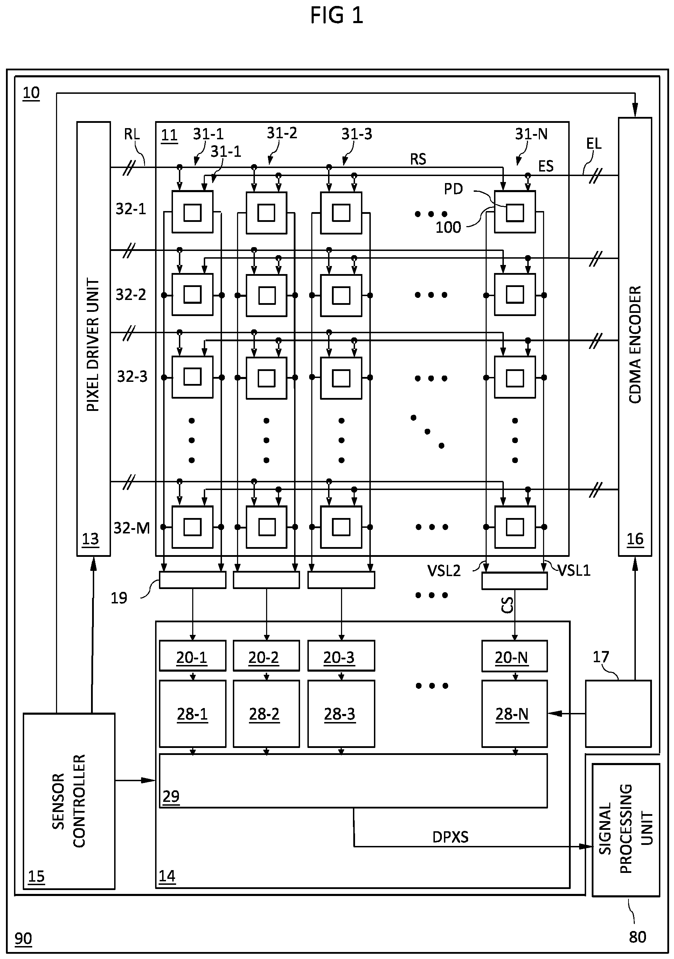

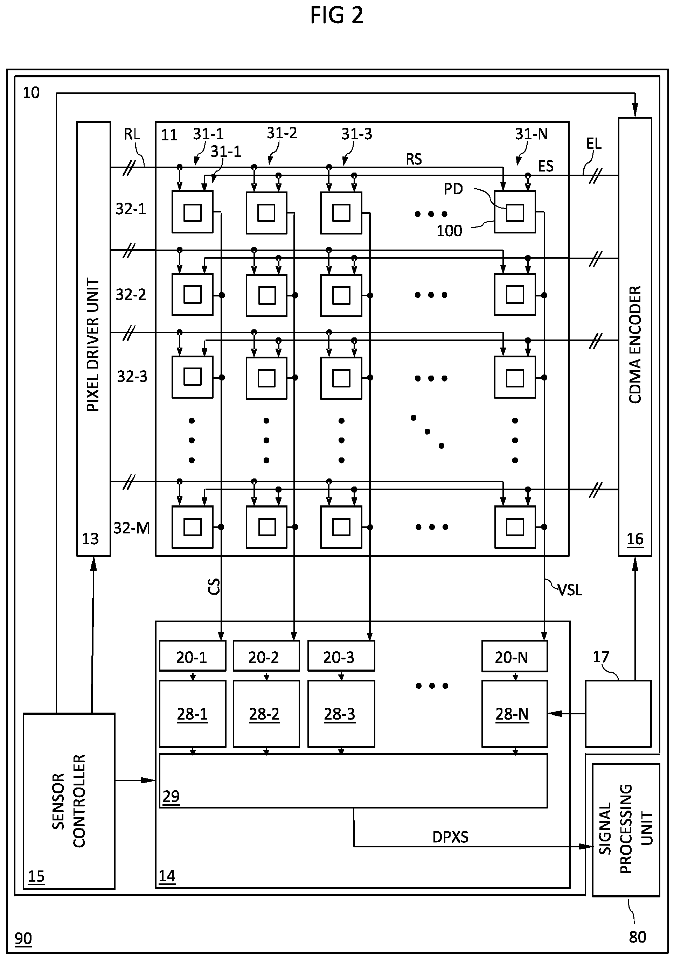

FIG. 1 and FIG. 2 illustrate configuration examples of a solid-state imaging device 90 according to embodiments of the present technology. The solid-state imaging device 90 includes an image sensor assembly 10 and a signal processing unit 80.

The solid state imaging device 90 includes a number N of pixel columns 31 and a plurality of column readout circuits 20. Each pixel column 31 includes a number M of pixel circuits 100. Each pixel circuit 100 generates a pixel signal containing pixel illumination information and output a non-inverted pixel signal or an inverted pixel signal in dependence on a voltage level of at least one row encoding signal ES. Each column readout circuit 20 receives at least one column signal CS obtained by superposition of the non-inverted pixel signals and the inverted pixel signals output by the pixel circuits 100 associated with one of the pixel columns 31.

In particular, the solid state imaging device 90 includes a pixel array unit 11 with the pixel circuits 100, wherein each pixel circuit 100 includes a photoelectric conversion element PD and a number of pixel transistors.

The photoelectric conversion element PD converts incident electromagnetic radiation into electric charge by the photoelectric effect. The amount of electric charge generated in the photoelectric conversion element PD corresponds to the intensity of the incident electromagnetic radiation. For example, the photoelectric conversion element PD may include or consist of a photodiode which converts electromagnetic radiation incident on a detection surface into a detector current by means of the photoelectric effect. The electromagnetic radiation may include visible light, infrared radiation and/or ultraviolet radiation.

The pixel transistors control the detector current and derive from the detector current pixel illumination information. The pixel illumination information may include information about the radiation intensity and/or about a change of the radiation intensity. The pixel transistors are FETs, e.g., MOSFETs (metal oxide semiconductor FETs) and configure the pixels circuits 100 as any active pixel sensors for intensity readout and/or event detection.

The pixel array unit 11 is a two-dimensional pixel array, wherein each pixel circuit 100 is part of one pixel column 31 and part of one pixel row 32. The pixel circuits 100 associated with the same pixel column 31 are arranged along a straight or meandering row in a horizontal plane of a semiconducting pixel substrate, and the pixel circuits 100 associated with the same pixel row 32 are arranged along a straight or meandering row in the horizontal plane of the semiconducting pixel substrate, wherein the pixel rows 32 extend substantially orthogonal to the pixel columns 31. The number M of pixel circuits 100 per pixel column 31 may be less than, equal to, or greater than the number N of pixel columns 31. The number M of pixel circuits 100 per pixel column 31 is equal to the number of pixel rows 32 in the pixel array 11. The pixel circuits 100 of the same pixel row 32 share common row control lines RL and common row encoding lines EL.

The row control lines RL supply row control signals RS to the pixel circuits 100, wherein the row control signals RS control the pixel transistors in the pixel circuits 100. Each row control line RL may be electrically connected to some pixel circuits 100 of a pixel row 32, to all pixel circuits 100 of one pixel row 32, to all pixel circuits 100 of a plurality of pixel rows 32, or to all pixel circuits 100 of the pixel array unit 11.

The row control lines RL connect the pixel array 11 and a row driver unit 13 that generates the row control signals RS. In particular, the row driver unit 13 may include driver/buffer circuits that drive suitable control signals and/or reference potentials for the pixel transistors in the pixel circuits 100. The row driver unit 13 may include one or more driver/buffer circuits per pixel row. Alternatively, two or more pixel rows or all pixel circuits 100 may share one, some or all of the driver/buffer circuits. A row control signal RS output by one driver/buffer circuit may be supplied to corresponding pixel transistors in the same pixel row 32, in some of the pixel rows 32 or in all pixel rows 32.

The row encoding lines EL supply row encoding signals ES to the pixel circuits 100. Each row encoding line EL may be electrically connected to some pixel circuits 100 of a pixel row 32 or to all pixel circuits 100 of one pixel row 32. One or two row encoding lines EL may be electrically connected to each pixel circuit 100.

The row encoding signals ES control whether a pixel circuit 100 outputs a non-inverted version of the pixel signal or an inverted version of the pixel signal in an encoding period.

In case of a pixel circuit 100 for intensity readout, the amplitude of the non-inverted pixel signal decreases with increasing illumination intensity and the amplitude of the inverted pixel signal increases with increasing illumination intensity. In other words, the non-inverted pixel signal and the inverted pixel signal have opposite signal directions, wherein the signal direction indicates the direction of an amplitude change in response to a change of illumination intensity. By definition, the non-inverted pixel signal has a positive signal direction (or signal phase), wherein the amplitude of the non-inverted pixel signal decreases with respect to a first reference value, The inverted pixel signal, on the other hand, has a negative signal direction (or signal phase), wherein the amplitude of the inverted pixel signal increases with respect to a second reference value. The first and second reference values typically differ from each other.

The inverted signal may be obtained by multiplying the pixel signal with -1. Then the non-inverted pixel signal (positive phase pixel signal) may be equal to the pixel signal or the pixel signal scaled by a positive gain and the inverted pixel signal (negative phase pixel signal) is equal to the negative pixel signal or the pixel signal scaled by a negative gain.

Generally, signal inversion may result in an opposite current flow direction of an inverted pixel current signal with respect to a flow direction of the non-inverted pixel current signal. Alternatively, signal inversion may result in an oppositely oriented amplitude of the inverted pixel voltage signal with respect to the non-inverted pixel voltage.

If one single row encoding signal ES is supplied to the pixel circuit 100, the pixel circuit 100 may output the non-inverted pixel signal at a voltage level of the row encoding signal ES exceeding a voltage threshold, and the pixel circuit 100 may output the inverted pixel signal at a voltage level falling below the voltage threshold, or vice versa. For example, the row encoding signal ES is a binary or ternary signal with an active high level and an active low level and the pixel circuit 100 outputs the non-inverted pixel signal at the active high level of the row encoding signal ES and the inverted pixel signal at the active low level or vice versa.

If two row encoding signals ES are supplied to the pixel circuit 100, the pixel circuit 100 may output the non-inverted pixel signal only at an active voltage level of the first row encoding signal ES and the inverted pixel signal only at an active voltage level of the second row encoding signal ES.

The pixel circuits 100 of the same pixel column 31 share at least one common data signal line (vertical signal line) VSL, wherein on each common data signal line VSL the non-inverted pixel signals and/or inverted pixel signals of the pixel circuits 100 are superposed. For example, each selected pixel circuit 100 of a pixel column 31 may output an output current and the output currents of all selected pixel circuits 100 are superposed on the data signal line VSL connected with the pixel circuits 100.

The solid state imaging device 90 further includes a column signal processing unit 14 containing the column readout circuits 20. Each column readout circuit 20 receives a column signal CS obtained from the selected pixel circuits 100 associated with the column readout circuit 20, e.g. by superposition of the non-inverted pixel signal and the inverted pixel signals, and converts the column signal into a digital column value.

In FIG. 1, two data signal lines VSL1, VSL2 electrically connect the pixel circuits 100 of one pixel column 31 with a subtraction unit 19. Each pixel circuit 100 outputs the non-inverted pixel signal or the inverted pixel signal in dependence on the voltage level of at least one row encoding signal RE. Each pixel circuit 100 spatially encodes the information about inversion of the pixel signal by virtue of the data signal line VSL1, VSL2 to which the non-inverted pixel signal and the inverted pixel signal are passed. For example, when the row encoding signal(s) ES control(s) the pixel circuit 100 to output the non-inverted pixel signal, the pixel circuit 100 passes the pixel signal to the first data signal line VSL1 thereby encoding it as non-inverted pixel signal, and when the row encoding signal(s) ES control(s) the pixel circuit 100 to output the inverted pixel signal, the pixel circuit 100 passes the pixel signal to the second data signal line VSL2, thereby encoding it as inverted pixel signal. The subtraction unit 19 subtracts the signal received on the second data signal line VSL2 from the signal received on the first data signal line VSL1 and passes the resulting column signal CS to the column readout circuit 20 associated with the pixel column 31. According to another embodiment, each column readout circuit 20 may receive one pixel column signal obtained by superposition of the pixel signals and the inverted pixel signals output by the pixel circuits 100 of one pixel column 31.

For example, FIG. 2 shows one single data signal line VSL electrically connecting the pixel circuits 100 of one pixel column 31 directly with the input of the column readout circuit 20 associated with the pixel column 31.

Each pixel circuit 100 outputs the non-inverted pixel signal or the inverted pixel signal in dependence on the voltage level of at least one row encoding signal RE. For example, when the row encoding signal(s) ES control(s) the pixel circuit 100 to output the non-inverted pixel signal, the pixel circuit 100 passes the non-inverted pixel signal to the data signal line VSL and when the row encoding signal(s) ES control(s) the pixel circuit 100 to output the inverted pixel signal, the pixel circuit 100 passes the inverted pixel signal to the data signal line VSL. The non-inverted and inverted pixel signals of one pixel column 31 are superposed to one column signal that is supplied to the input of the respective column readout circuit 20.

The combination of pixel circuits 100 that output either an inverted pixel signal or a non-inverted pixel signal in dependence of the voltage level of one or more row encoding signals ES applied to a the pixel circuits 100 assigned to the same pixel row 32-1, ..., 32-M in combination with a column readout circuit 20 that receives a pixel column signal obtained by superposition of the inverted pixel signals and the not-inverted pixel signals facilitates an encoded readout method. By repeating the encoding using different code words of a suitable binary spreading code, the original pixel signals for each single pixel circuit can be restored without loss of illumination information. For a given frame rate, which is the frequency at which the complete image data is read out once, the encoded readout method provides higher SNR than any usual row-by-row readout method.

In particular, the solid state imaging devices 90 illustrated in FIG. 1 and FIG. 2 facilitate a method of operating that includes sequentially applying a number L of code words of a binary spreading code matrix to pixel columns of a two-dimensional pixel array. The code words have a code length L. Each code word is applied to some or all of the pixel columns simultaneously. Each bit of a code word is applied to a different pixel row. Depending on an element value of the binary spreading code matrix received by a pixel circuit, each pixel circuit outputs a non-inverted pixel signal or an inverted pixel signal. The method further includes converting the pixel signals output by the pixel circuits of the same pixel column into a single column signal by superposition of the non-inverted pixel signals and the inverted pixel signals.

Accordingly, the solid state imaging devices shown in FIG. 1 and FIG. 2 further include an encoding unit 16 configured to generate the row encoding signals ES according to a binary spreading code matrix. The binary spreading code matrix may be a square or non-square matrix. According to an embodiment, the binary spreading code matrix is a square matrix to reduce computational load. For example, the binary spreading code matrix is a square matrix with a number L of code words with a code length L. The number L of code words is equal to or smaller than the number M of pixel circuits 100 per pixel column 31.

Each code word is applied to some or all of the pixel columns 31 simultaneously. The binary spreading code matrix may be that of an orthogonal spreading code, e.g., a Walsh-Hadamard matrix.

According to an embodiment, the binary spreading code matrix is a square Walsh-Hadamard matrix with a code length L equal to the number M of pixel circuits 100 per pixel column 31. All pixel rows 32-1, ..., 32-M are addressed and read out simultaneously.

According to another embodiment, the binary spreading code matrix includes a square matrix, in particular a Walsh-Hadamard matrix, with a code length L less than the number M of pixel circuits 100 per pixel column 31. The pixel array includes two or more sets of pixel rows 32-1, ..., 32-L with L < M. The pixel rows of the same set of pixel rows 32-1, ..., 32-L are addressed and encoded simultaneously. The sets of pixel rows 32-1, ..., 32-L are addressed and encoded sequentially. Computational load, in particular in a decoding process as explained below, can be reduced. L may be an integer divisor of M.

A memory unit 17 may store the elements of the binary spreading code matrix. The memory unit 17 may include a memory circuit with read-only memory cells or with rewriteable memory cells, by way of example. The element values of the binary spreading code matrix may be noted as +1 and -1 and can be directly transformed into a suitable row encoding signal or two suitable row encoding signals.

For example, the encoder unit 16 converts the element value +1 into a first signal level of a single row encoding signal ES and converts the element value -1 into a second signal level of the single row encoding signal ES, wherein the first signal level causes a readout of the non-inverted pixel signal and the second signal level causes a readout of the inverted pixel signal from the pixel circuit 100 addressed by the row encoding signal.

According to another example, the encoder unit 16 may convert the element value +1 into an active signal level of a first row encoding signal ES and the element value -1 into an active signal level of a second row encoding signal ES, wherein the active signal level of the first row encoding signal causes a readout of the non-inverted pixel signal and the active signal level of the second row encoding signal level causes a readout of the inverted pixel signal from the pixel circuit 100 addressed by the row encoding signals.

The solid state imaging devices shown in FIG. 1 and FIG 2 further include a number N of digital blocks 28. Each digital block 28-1, ..., 28-N receives a set of digital column values from one of the column readout circuits 20-1, ...., 20-N. The number of digital values per set of digital column values is equal to the code length L of the binary spreading code matrix. Each digital block 28-1, ..., 28-N decodes the received set of digital column values by using the same binary spreading code matrix as used for decoding the individual pixel signals.

The digital blocks 28 and the encoder unit 16 may use the same memory unit 17 for obtaining the element values of the binary spreading code matrix as illustrated. According to another example, the digital blocks 28 and the encoder unit 16 may use different memory units with the same content.

The digital blocks 28 facilitate decoding of each frame previously encoded by using L different code words of the binary spreading code matrix. The digital blocks 28-1...., 28-N restore the previously encoded pixel signals as digital values.

The column signal processing unit 14 may further include an interface unit 29 that generates a digital pixel signal DPXS including the digital values of the pixel circuits 100 of all pixel columns 31-1, ..., 31-N and supplies the digital pixel signal DPXS to the signal processing unit 80.

With the encoding unit 16 and the digital blocks 28-1, ..., 28-N, the solid state imaging devices 90 facilitate a CDMA readout method that includes converting the column signals into digital column values for each pixel column, storing a number M of digital column values for each pixel column 32; and decoding the stored digital column values for each pixel column 32 by using the binary spreading code matrix.

FIG. 1 and FIG. 2 further show a sensor controller 15 that controls the other components of the image sensor assembly 10. The sensor controller 15 may supply driving timing signals to the row driver unit 13 and may control the timing of the encoding unit 16. In addition, the sensor controller 15 generates and drives one or more control signals for controlling the column signal processing unit 14, e.g. the column readout circuits 20-1, ...., 20-N, t. the digital blocks 28-1, ...., 28-N, and the interface unit 29.

The pixel array 11, the row driver unit 13, the column signal processing unit 14, the encoding unit 16, the memory unit 17, and, if applicable, the subtraction unit 19 may be formed as part of the image sensor assembly 10.

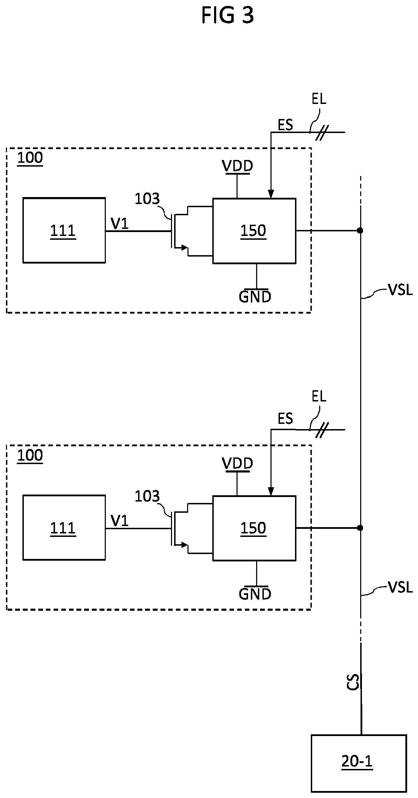

FIG. 3 shows details of a pixel circuit 100. The pixel circuit 100 may include a radiation conversion circuit 111 generating an illumination signal V1. The illumination signal V1 may be an analog voltage signal proportional to the intensity of received illumination or a digital signal indicating whether or not the received illumination has changed more than by a predetermined threshold value. The illumination signal V1 corresponds to a pixel signal or controls a pixel signal output by the pixel circuit 100.

According to an embodiment, each of the pixel circuits 100 may include a signal inverting circuit 150 that outputs one of the non-inverted pixel signal and the inverted pixel signal in dependence on a voltage level of one row encoding signal ES or in dependence of voltage levels of two row encoding signals ES.

In particular, each of the pixel circuits 100 may include an output transistor 103 electrically connectable with an input of the column readout circuit 20 associated with the pixel circuit 100. The signal inverting circuit 150 of the pixel circuit 100 controls a signal direction tin dependence on the voltage level of the row encoding signal ES or in dependence of the voltage levels of the two row encoding signals ES.

The output transistor 103 may be an FET. The illumination signal V1 controls the output transistor 103. The signal inverting circuit 150 temporarily connects the output transistor 103 and the input of a column readout circuit 20 through a data signal line VSL.

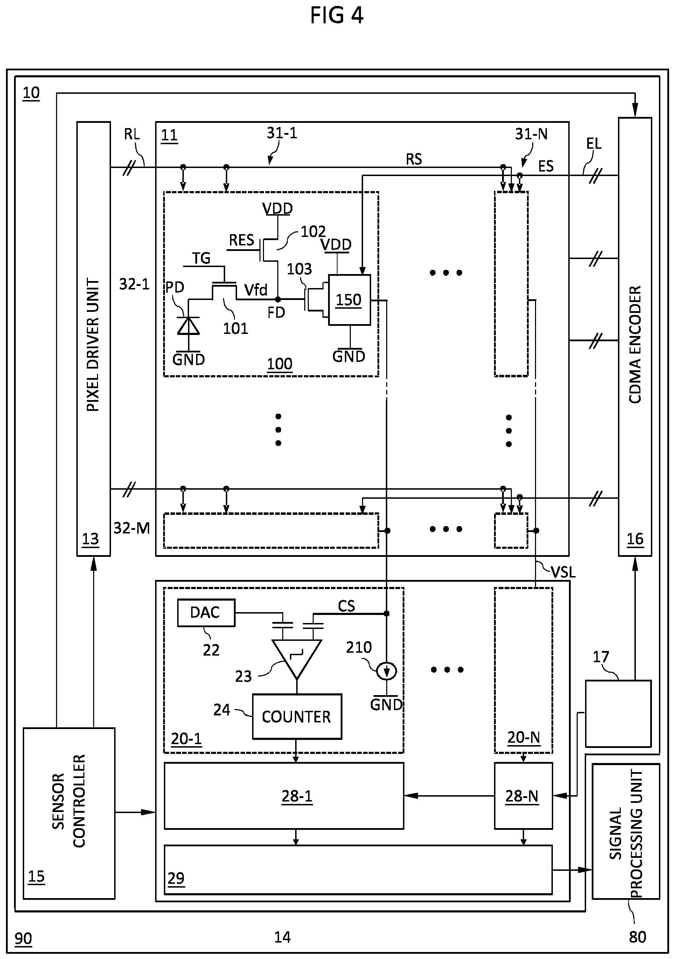

FIG 4 shows a solid state imaging device 90 for intensity readout. The pixel circuits 100 may be any active pixel sensors suitable for intensity readout. For simplicity, the example shown refers to pixel circuits 100 having one photoelectric conversion element PD and three FETs as pixel transistors.

The photoelectric conversion element PD may include or may be composed of, for example, a photodiode that converts electromagnetic radiation incident on a detection surface into a detector current by means of the photoelectric effect. In the intensity range of interest, the detector current increases approximately linearly with increasing intensity of the detected electromagnetic radiation.

The pixel transistors include a transfer transistor 101, a reset transistor 102, and an output transistor 103.

The transfer transistor 101 is electrically connected between the cathode of the photoelectric conversion element PD and a floating diffusion region FD. The transfer transistor 101 serves as transfer element for transferring charge from the photoelectric conversion element PD to the floating diffusion region FD. The floating diffusion region FD serves as temporary local charge storage. A transfer signal TG is supplied to the gate (transfer gate) of the transfer transistor 101 through a transfer control line. Thus, the transfer transistor 101 may transfer electrons photoelectrically converted by the photoelectric conversion element PD to the floating diffusion region FD. The transfer control line is an example of a row control line RL as described above. The transfer signal TG is an example of a row control signal RS as described above.

The reset transistor 102 is connected between the floating diffusion region FD and a power supply line to which a positive supply voltage VDD is supplied. A reset signal RES is supplied to the gate of the reset transistor 102 through a reset control line. Thus, the reset transistor 102 serving as a reset element resets a floating diffusion potential Vfd of the floating diffusion region FD to that of the power supply line supplying the positive supply voltage VDD. The reset control line is another example of a row control line RL as described above. The reset signal RES is another example of a row control signal RS as described above.

The floating diffusion region FD is connected to the gate of the output transistor 103 serving as an amplification element. The floating diffusion region FD functions as the input node of the output transistor 103. The output transistor 103 may be operable in a source follower configuration between the positive supply voltage VDD and a source load and outputs the pixel signal, wherein the amplitude of the pixel signal depends on the floating diffusion potential Vfd of the floating diffusion region FD. The output transistor 103 is connected to the data signal line VSL through the signal inverting circuit 150.

The signal inverting circuit 150 outputs the non-inverted pixel signal or the inverted pixel signal in dependence on a voltage level of one row encoding signal ES or in dependence of voltage levels of two row encoding signals ES. In particular, the signal inverting circuit 150 of the pixel circuit 100 controls a signal direction of the pixel signal in dependence on the voltage level of the row encoding signal ES or in dependence of the voltage levels of the two row encoding signals ES.

The data signal line VSL is further connected to a constant current circuit 210. The constant current circuit 210 may include a constant current source, e.g., a resistive element, a FET with constant gate bias, or a switched capacitor current source supplying at least temporarily a constant current to the data signal line VSL.

The output transistor 103 of the pixel circuit 100 and the constant current circuit 210 complement each other to a source follower circuit supplying a column signal CS derived by superposition of the individual pixel signals to a column readout circuit 20-1, ..., 20-N. Each column readout circuit 20-1, ..., 20-N. includes an ADC analog-to-digital converter having a ramp generator 22, a comparator 23 and a counter 24. Each column readout circuit 20-1, ..., 20-N. transforms the received column signal CS into a digital column value and transmits the digital column value to the digital block 28-1, ..., 28-N associated with the column readout circuit 20-1, ..., 20-N. Each digital block 28-1, ..., 28-N receives and decodes the received set of digital column values by using the same binary spreading code as used for decoding the individual pixel signals. An interface unit 29 generates a digital pixel signal DPXS including the digital values of the pixel circuits 100 of all pixel columns 31-1, ..., 31-N and transmits the digital pixel signal DPXS to the signal processing unit 80.

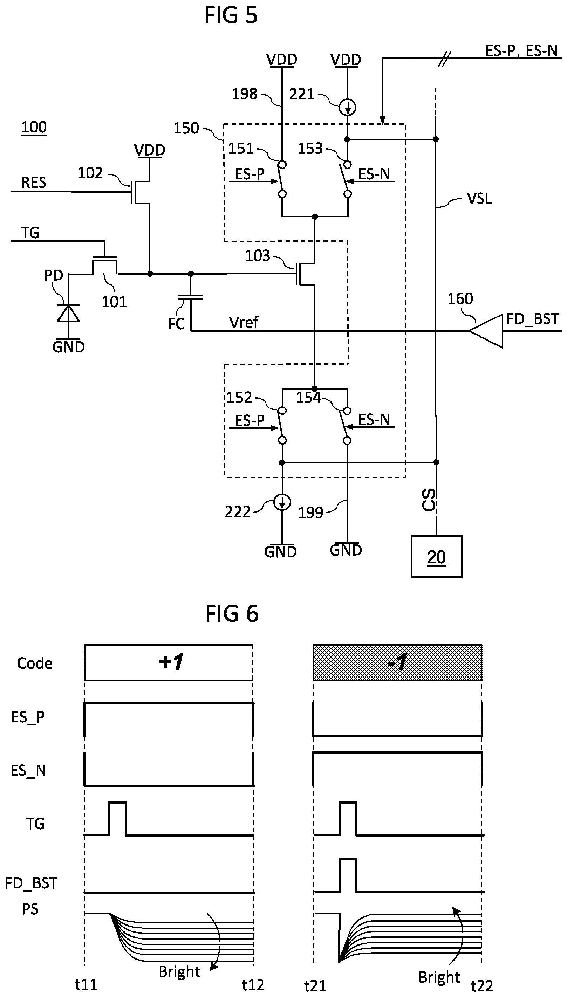

FIG. 5 shows details of a pixel circuit 100 that includes a signal inverting circuit 150 to output one of the non-inverted pixel signal and the inverted pixel signal in dependence on a voltage level of two row encoding signals ES-P, ES-N.

The pixel circuit 100 is of the intensity readout type. For simplicity, a pixel circuit type including one single photoelectric conversion element PD, a transfer transistor 101, a reset transistor 102 and an output transistor 103 is illustrated. The output transistor 103 is electrically connectable with an input of a column readout circuit 20 through a data signal line VSL.

A signal inverting circuit 150 that controls a signal direction of the pixel signal output by the output transistor 103 in dependence on the voltage level of the voltage levels of the two row encoding signals ES-P, ES-N.

In particular, the signal inverting circuit 150 connects a first source/drain of the output transistor 103 with a positive supply voltage rail 198 and a second source/drain of the output transistor 103 with an input of the column readout circuit 20 in a first state. In a second state, the signal inverting circuit 150 connects the first source/drain with the input of the column readout circuit 20 and the second source/drain with a negative supply voltage rail 199. The signal inverting circuit 150 changes between the first state and the second state in dependence on the voltage levels of the two row encoding signals ES-P, ES-N.

To this purpose, the signal inverting circuit 150 includes a first switch element 151 between the first source/drain of the output transistor 103 and the positive supply voltage rail 198, a second switch element 152 between the second source/drain of the output transistor 103 and the input of the column readout circuit 20, a third switch element 153 between the first source/drain and the input of the column readout circuit 20 and a fourth switch element 154 between the second source/drain and the negative supply voltage rail 199. A first row encoding signal ES-P turns on and off the first switch element 151 and the second switch element 152. A second row encoding signal ES-P turns on and off the third switch element 153 and the fourth switch element 154.

In particular, the first row encoding signal ES-P may synchronously turn on and off the first switch element 151 and the second switch element 152, and the second row encoding signal ES-P may synchronously turn on and off the third switch element 153 and the fourth switch element 154. Each of the switch elements 151, 152, 153, 154 may be or include an FET, or a transfer gate, by way of example.

A first constant current circuit 221 may be electrically connected between the input of the column readout circuit 20 and the positive supply voltage rail 198 and a second constant current circuit 222 may be electrically connected between the input of the column readout circuit 20 and the negative supply voltage rail 199.

In particular, the connection of the first and second constant current circuits 221, 222 depends on the coded mode of the pixel circuit 100: In the non-inverting mode outputting the non-inverted pixel signal, the second constant current circuit 222 is connected to the source node of pixel output transistor 103. The pixel output transistor 103 is in a source follower configuration (common drain configuration). Each pixel circuit 100 connected to the same data signal line VSL and being in the non-inverting mode changes the voltage on the data signal line VSL in the same direction. In the inverting mode, the first constant current circuit 221 is connected to the drain node of pixel output transistor 103. The pixel output transistor is in a common source configuration. The sign of the gain in the common source configuration is opposite to the sign of the gain in the common drain configuration. Each pixel circuit 100 connected to the same data signal line VSL and being in the inverting mode changes the voltage on the data signal line VSL in the same direction, which is opposite to that for the non-inverting mode.

The illustrated type of pixel circuit 100 includes a floating capacitor FC as temporary local charge storage for electrons photoelectrically converted by the photoelectric conversion element PD. A floating first electrode of the floating capacitor FC is electrically connected to the transfer transistor 101 and a gate of the output transistor 103. According to other examples, a floating diffusion may be provided in place of the floating capacitor FC or in combination with the floating capacitor FC.

A booster circuit 160 may control a reference potential Vref for control inputs of the output transistors 103. An output of the booster circuit 160 may be electrically connected to the second electrode of the floating capacitor FC. The booster circuit 160 may support the inversion of the signal direction of the pixel signal.

A booster control signal FD_BST is supplied to an input of the booster circuit 160 and thereby controls the reference potential Vref on the second electrode of the floating capacitor FC. The signal level of the booster control signal depends on which of the row encoding signals ES-P, ES-N is active. Thus the booster control signal is a row specific signal. At least one booster circuit 160 can be provided for each pixel row.

For the non-inverted mode, the booster control signal FD_BST may be set to the lower pixel supply potential GND as it is usually the case for a row-by-row readout scheme. For the inverted mode, the signal level of the booster control signal FD_BST may change synchronously with the signal level of the transfer signal TG to control the gate-to-source voltage VGS between gate and source of the pixel output transistor 103. For example, a positive signal level of the booster control signal FD_BST may reduce the effective gate-to-source voltage VGS and in this way avoid premature saturation of the pixel output transistor 103. In particular, the booster control signal FD_BST may control the pixel output signal PS to match the signal ranges for the inverted mode and the non-inverted mode. To this purpose, the booster control signal FD_BST can be controlled row-by-row based on the code direction (non-inverting or inverting) for the respective pixel row.

FIG. 6 shows two simplified time charts for control signals and internal signals of the pixel circuit 100 in FIG. 5, wherein each of the time charts focusses on the encoding performed after pixel reset and charge accumulation in a photoelectric conversion element of the pixel circuit.

The left hand side of FIG.6 shows a first encoding period starting at t=t11 and ending at t=t12. A first code word is applied to a pixel array including the pixel circuit 100. The first code word is simultaneously applied to all pixel rows of the pixel array. In the first code word, the element value assigned to the pixel row including the pixel circuit 100 is "+1".

An encoding unit 16 as illustrated in FIG. 4 outputs an active first row encoding signal ES-P closing the first switch element 151 and the second switch element 152. In addition, the encoding unit 16 outputs an inactive second row encoding signal ES-N such that the third switch element 153 and the fourth switch element 154 are open. The output transistor 103 is in the usual source follower configuration for outputting the non-inverted pixel signal (positive phase pixel signal).

Further, the encoding unit 16 outputs a booster control signal FD_BST with a first signal level setting the reference voltage Vref on the second electrode of the floating capacitor FC to a first reference voltage level, which may be the lower pixel supply potential GND.

A row driver unit 13 as illustrated in FIG. 4 supplies a transfer signal TG with a short positive voltage pulse to the gate of the transfer transistor 101. During the voltage pulse of the transfer signal TG, the transfer transistor 101 transfers charge from the photoelectric conversion element PD to the first electrode of the floating capacitor FC. In response to the voltage pulse of the transfer signal TG, the output transistor 103 supplies a pixel output signal PS with a voltage level depending on the amount of charge on the first electrode of the floating capacitor FC, wherein the voltage level decreases with increasing amount of charge (positive signal direction). The maximum level of the pixel output signal PS provides a reference level for the non-inverted case.

The right hand side of FIG.6 shows a second encoding period starting at t=t21 and ending at t=t22, wherein the second encoding period starts after another pixel reset and charge accumulation phase. A second code word is applied to the pixel array including the pixel circuit 100 simultaneously to all pixel rows of the pixel array. In the second code word, the element value assigned to the pixel row including the pixel circuit 100 is "-1".

The encoding unit 16 as illustrated in FIG. 4 outputs an inactive first row encoding signal ES-P opening the first switch element 151 and the second switch element 152, and an active second row encoding signal ES-N closing the third switch element 153 and the fourth switch element 154. The output transistor 103 is in a common source configuration complementary to the common drain configuration for t11 < t < t12 and outputs an inverted pixel signal (negative phase pixel signal). Further, the encoding unit 16 outputs a booster control signal FD_BST with a second signal level setting the reference voltage Vref on the second electrode of the floating capacitor FC to a second reference voltage level, at least for a time span equal to the duration of the pulse of the transfer signal TG that transfers the charge from the photoelectric conversion device to the floating capacitor FC. The transfer signal TG may return to the inactive signal level and the booster control signal FD_BST may return to the lower pixel supply potential GND to adjust the gate-to-source voltage VGS of the pixel output transistor 103. The booster control signal FD_BST facilitates matching of the amplitude of the pixel output signals PS of the inverting pixel and the non-inverting pixel. Thus, the output transistor 103 supplies a pixel output signal PS with a voltage level depending on the amount of charge on the first electrode of the floating capacitor FC, wherein the voltage level increases with increasing amount of charge (negative signal direction). The minimum level of the pixel output signal PS may set the reference level for the inverted case.

The non-inverted pixel signal and the inverted pixel signal have own reference levels in the case of the dark light, wherein the maximum level of the pixel output signal PS sets the reference level for the non-inverted pixel signal mode, and wherein the minimum level of the pixel output signal PS sets the reference level for the inverted pixel signal mode.

For each encoding period, pixel output signals routed to the same data signal line VSL superpose to a single column signal CS, which the associated column readout circuit 20 converts to a digital column value. The encoding is repeated with all code words of the binary spreading code matrix.

From the digital column values obtained in the encoding periods, a digital block can restore the original pixel signals.

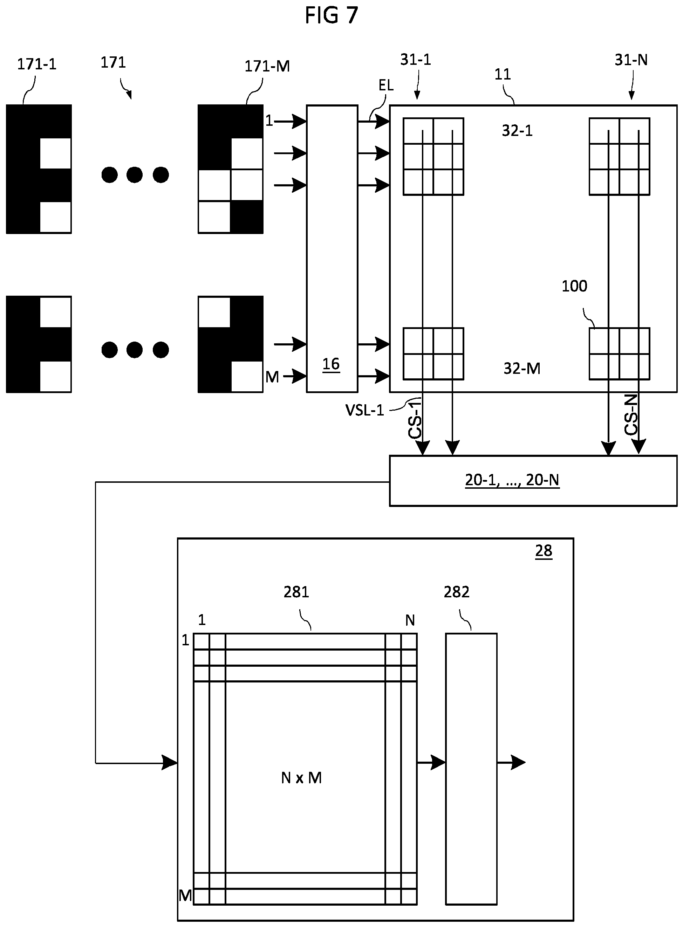

FIG. 7 gives an overview of the encoding and decoding process for a CDMA readout of a pixel array 11 with a plurality of pixel circuits 100 arranged in N pixel columns 31-1, ..., 31-N and M pixel rows 32-1, ..., 32-M.

An encoding unit 16 uses a M x M binary spreading code matrix 171 with M different code words 171-1, ..., 171-M, wherein each code word 171-1, ..., 171-M includes M code elements. The binary spreading code matrix 171 may be a Walsh-Hadamard matrix. Each code element has a value +1 indicated by a white square or a value -1 indicated by a black square.

For one encoding period, the encoding unit 16 applies one of the code words 171-1, ..., 171-M to each of the N pixel columns 31-1, ..., 31-N through row encoding lines EL. Each of the pixel circuits 100 outputs the non-inverted pixel signal in case the encoding unit 15 applies a code element with value +1. Each of the pixel circuits 100 outputs the inverted pixel signal in case the encoding unit 15 applies a code element with value -1.

The non-inverted and/or inverted pixel signals superpose to a column signal CS-1, ..., CS-M on a data signal line VSL-1, ..., VSL-N connecting the outputs of the pixel circuits 100 of a pixel column 31-1,..., 31-N with an input of a the column readout circuit 20-1, ..., 20-N associated with the respective pixel column 31-1,..., 31-N. The column readout circuit 20-1, ..., 20-N associated with the respective pixel column 31-1, ..., 31-N converts the column signal CS-1, ..., CS-M into one digital column value per encoding period and pixel column 31-1,..., 31-N.

A complete frame readout period includes M encoding periods, wherein in each encoding period the encoding unit 16 applies another one of the code words 171-1, ..., 171-M to each of the N pixel columns 31-1, ..., 31-N. The column readout circuit 20-1, ..., 20-N transfers the digital column values for each pixel column 31-1, ..., 31-N and each code word 171-1, 171-M to a memory unit 281 of a digital block 28.

After a complete frame readout period, the memory unit 281 holds for each of the N pixel columns 31-1, ..., 31-N an encoded word containing M digital column values. The digital block 28 further includes a decoder unit 282 that sequentially applies words of a decoding matrix to decode the M digital column values into the M pixel values. The decoding matrix may be the inverted binary spreading code matrix 171.

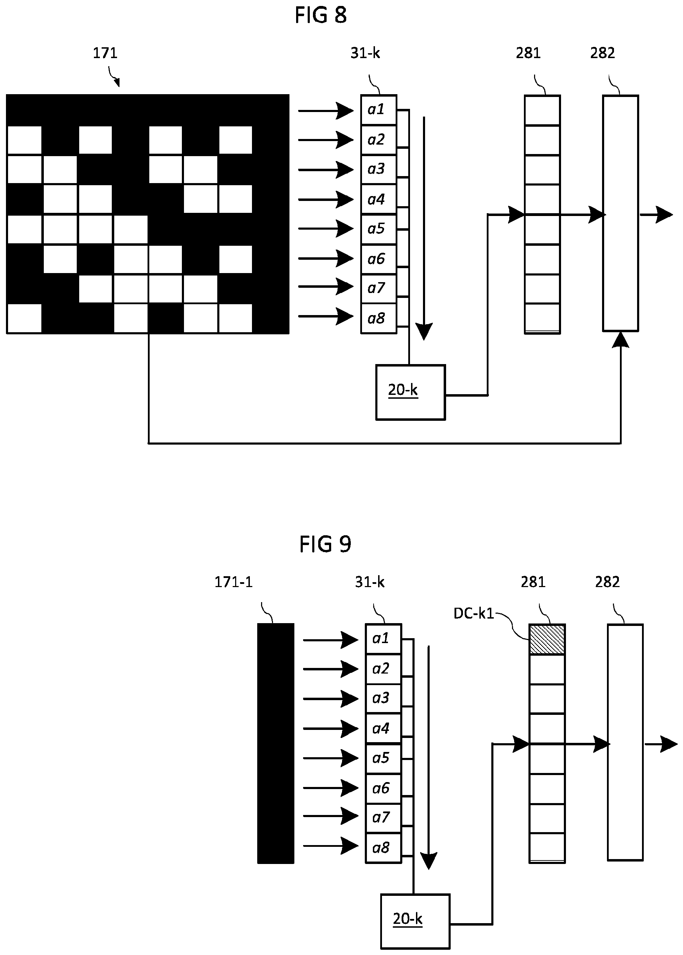

FIG. 8 through FIG. 11 illustrate the encoding process using a binary spreading code matrix 171 implemented as 8 x 8 Walsh-Hadamard code matrix and a pixel array with 8 pixel rows for simplicity. The eight pixel signals of the k-th pixel column 31-k have the amplitudes a1, a2, a3, a4, a5, a6, a7, a8 as illustrated in FIG. 8

FIG. 9 shows application of the first code word 171-1 of the binary spreading code matrix 171 onto the k-th pixel column 31-k in a first encoding period. Each pixel signal is inverted. The resulting first column signal CS1 of the k-th pixel column 31-k has the amplitude aCS1 = - a1- a2 - a3 - a4 - a5 - a6 - a7 - a8. The first column signal CS1 is converted into a first digital column value DC-k1of the k-th pixel column 31-k and stored as first element in the k-th column of a memory unit 281.

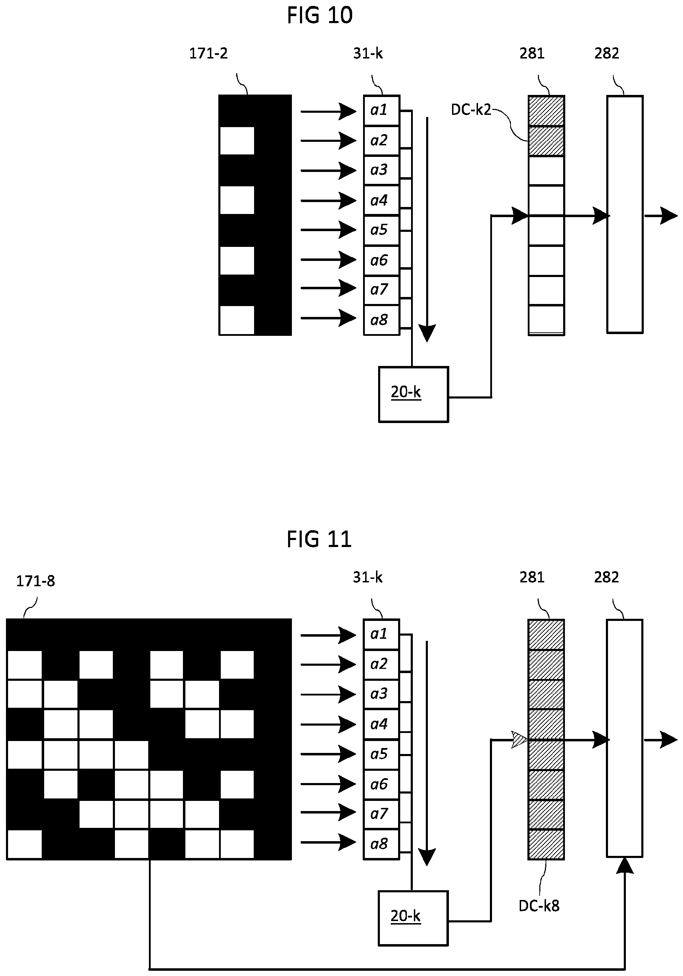

FIG. 10 shows application of the second code word 171-2 of the binary spreading code matrix 171 onto the k-th pixel column 31-k in a second encoding period. Each odd pixel signal is inverted. The resulting second column signal CS2 of the k-th pixel column 31-k has the amplitude aCS2 = - a1+ a2 - a3 + a4 - a5 + a6 - a7 + a8. The second column signal CS2 is converted into a second digital column value DC-k2 of the k-th pixel column 31-k and stored as second element in the k-th column of the memory unit 281.

FIG. 11 shows application of the eighth code word 171-8 of the binary spreading code matrix 171 onto the k-th pixel column 31-k in an eighth encoding period. The resulting eighth column signal CS8 of the k-th pixel column 31-k has the amplitude aCS8 = - a1+ a2 + a3 - a4 + a5 - a6 - a7 + a8. The eighth column signal CS8 is converted into an eighth digital column value DC-k8 of the k-th pixel column 31-k and stored as eighth element in the k-th column of a memory unit 281.

A complete frame readout period includes all eight encoding periods. Within the same frame readout period, the pixel signals on which the encoding is applied, in substance do not change. As far as the pixel output signals PS do slightly change, e.g. as a result of noise, the restored signal represents an averaged value across the eight pixel signals for the eight encoding periods.

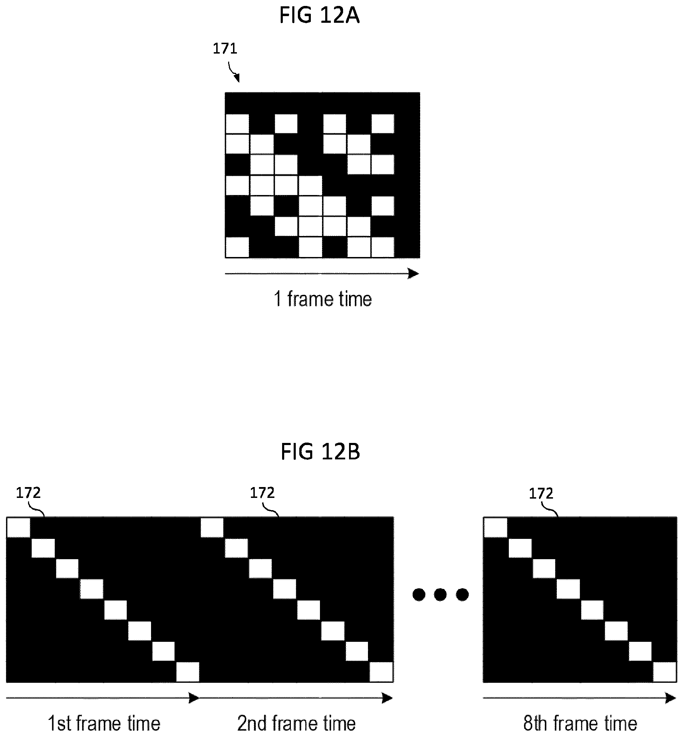

FIG. 12A shows a typical binary spreading code matrix 171 of the Walsh-Hadamard type. Each coded readout reads out all pixel circuits 100 of a pixel column such that the same pixel signal is read out 8 times, that is once for each of the code words of the binary spreading code matrix 171. The inherent averaging effect for each pixel signal improves the SNR by √8.

In contrast, in a conventional row-by-row readout as schematically illustrated in FIG. 12B, each pixel circuit 100 is only read out "once" per frame readout period, as indicated by the white squares in the matrices 172. To achieve the same improvement in SNR by averaging, eight complete frames are necessary.

That is, for achieving the same SNR in the same frame readout period, the CDMA encoded readout allows reducing the supply voltages in a pixel array by √M and thus may contribute to a significant reduction of power consumption in a solid state imaging device.

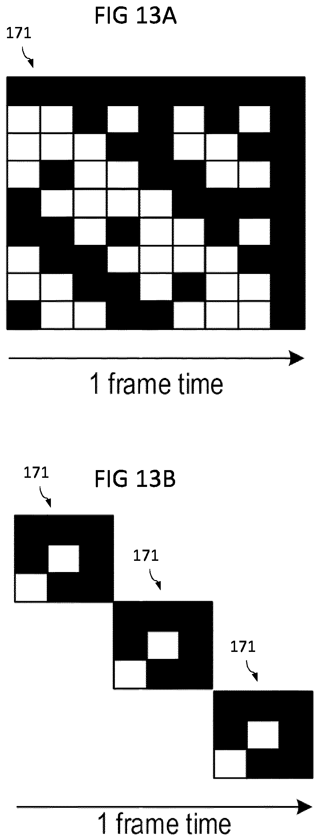

FIG. 13A and FIG. 13B refer to an adaptive embodiment of the encoding unit 16 as illustrated in FIG. 1, FIG. 2 and FIG. 4 for an illustrative example with a binary spreading code matrix with a number M of code words M=9. Typically the number M of code words is greater than 1000.

In particular, the encoding unit 16 may change between a first encoding mode and a second encoding mode in response to an encoder control signal. In the first encoding mode the encoding unit 16 uses a first binary spreading code matrix with a code length L equal to the number M of pixel circuits 100 per pixel column 31. In a second encoding mode, the encoding unit 16 uses a second binary spreading code matrix with a code length L less than the number M of pixel circuits 100 per pixel column 31,

FIG. 13A shows the 9 x 9 binary spreading code matrix 171 used for the first encoding mode. All M pixel rows 32-1, ..., 32-M are addressed and read out simultaneously in each encoding period.

For the second encoding mode, the pixel rows are grouped into two or more sets of pixel rows 32-1, ..., 32-L with L < M. The pixel rows of the same set of pixel rows 32-1, ..., 32-L are addressed and encoded simultaneously in the same encoding period. L may be an integer divisor of M to allow application of the same binary spreading code matrix 171 to all sets of pixel rows 32-1, ..., 32-L.

FIG. 13B shows a 3 x 3 binary spreading code matrix 171 sequentially applied to three sets of pixel rows 32-1, ..., 32-L.

The encoder control signal may be generated in the sensor controller 15 of FIG. 1, FIG. 2 or FIG. 4 in response to a change of an internal state or a user setting.

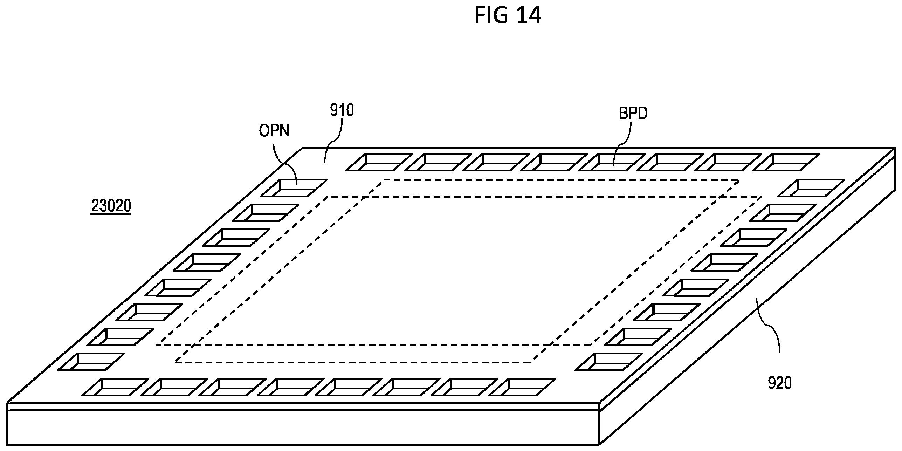

FIG. 14 is a perspective view showing an example of a laminated structure of a solid-state imaging device 23020 with a plurality of pixel circuits arranged matrix-like in array form. Each pixel circuit includes at least one photoelectric conversion element.

The solid-state imaging device 23020 has the laminated structure of a first chip (upper chip) 910 and a second chip (lower chip) 920.

The laminated first and second chips 910, 920 may be electrically connected to each other through TC(S)Vs (Through Contact (Silicon) Vias) formed in the first chip 910.

The solid-state imaging device 23020 may be formed to have the laminated structure in such a manner that the first and second chips 910 and 920 are bonded together at wafer level and cut out by dicing.

In the laminated structure of the upper and lower two chips, the first chip 910 may be an analog chip (sensor chip) including at least one analog component of each pixel circuit, e.g., the photoelectric conversion elements arranged in array form.

For example, the first chip 910 may include only the photoelectric conversion elements of the pixel circuits as described above with reference to the preceding FIGS. Alternatively, the first chip 910 may include further elements of each pixel circuit. For example, the first chip 910 may include, in addition to the photoelectric conversion elements, at least the transfer transistor, the reset transistor, the output transistor, and/or the selection transistor of the pixel circuits. Alternatively, the first chip 910 may include each element of the pixel circuit. Alternatively, the first chip 910 may include each element of the pixel circuit and the capacitor control circuit 230 of FIG. 4.

The second chip 920 may be mainly a logic chip (digital chip) that includes the elements complementing the elements on the first chip 910 to complete pixel circuits and current control circuits. The second chip 920 may also include analog circuits, for example circuits that quantize analog signals transferred from the first chip 910 through the TCVs.

The second chip 920 may have one or more bonding pads BPD and the first chip 910 may have openings OPN for use in wire-bonding to the second chip 920.

The solid-state imaging device 23020 with the laminated structure of the two chips 910, 920 may have the following characteristic configuration:
The electrical connection between the first chip 910 and the second chip 920 is performed through, for example, the TCVs. The TCVs may be arranged at chip ends or between a pad region and a circuit region. The TCVs for transmitting control signals and supplying power may be mainly concentrated at, for example, the four corners of the solid-state imaging device 23020, by which a signal wiring area of the first chip 910 can be reduced.

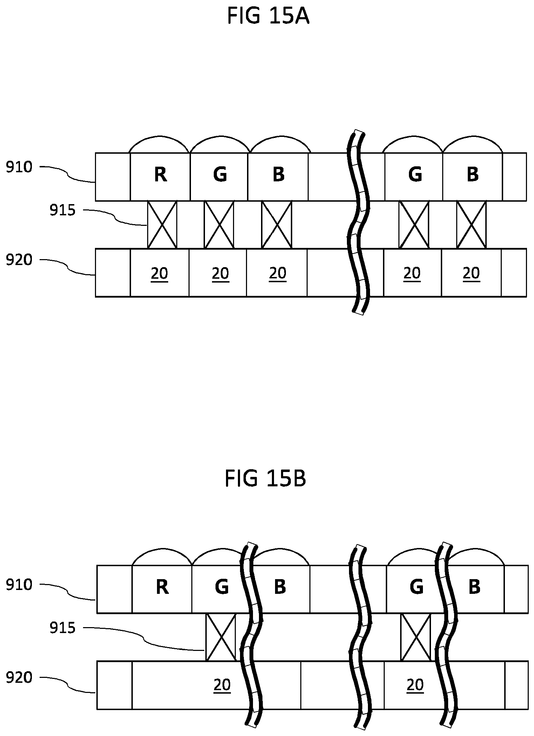

In FIG. 15A and FIG. 15B the first chip 910 includes a plurality of pixel circuits 100 assigned to different colors red (R), green (G) and blue (B). The second chip 920 includes the column signal processing unit with the column readout circuits 20.

In FIG. 15A, contact structures 915 electrically connect each single pixel circuit 100 of a pixel column with a data signal line formed on the second chip 920.

In FIG. 15B, the first chip 910 includes a section of the data signal line VSL. The non-inverted and inverted pixel signals superpose in the first chip 920. One single contact structure 915 passes the resulting column signal CS to the associated column readout circuits 20 on the second chip 920.

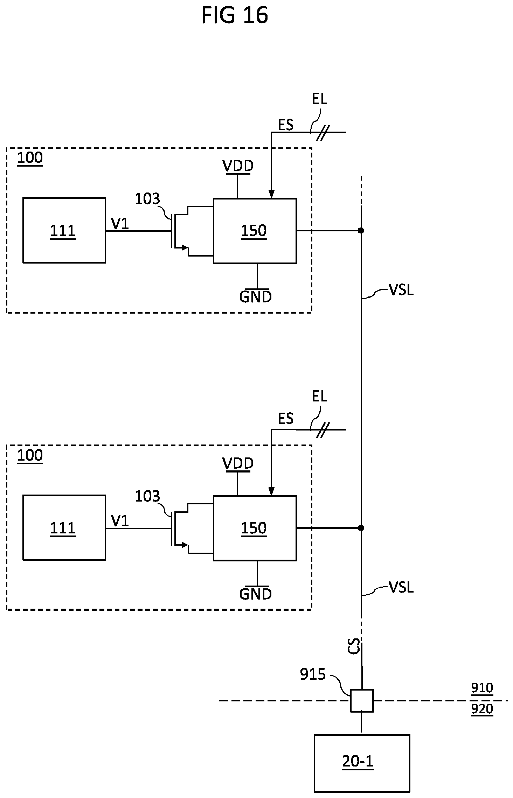

FIG. 16 shows another possible allocation of elements of a solid-stage imaging device across the first chip 910 and the second chip 920 of FIG. 14.

The first chip 910 may include the pixel circuits 100 with photoelectric conversion elements, the signal inverting circuits 150 and sections of the data signal lines VSL connecting the outputs of the pixel circuits 100 associated with the same pixel column on the first chip 910. The second chip 920 may include inter alia the booster circuits 160 and the column signal processing unit with the constant current circuits 221, 222 and as illustrated in FIG. 5. One contact structure 915, e.g. a through contact via, per data signal line VSL may pass the column signal CS from the first chip 910 to the second chip 920.

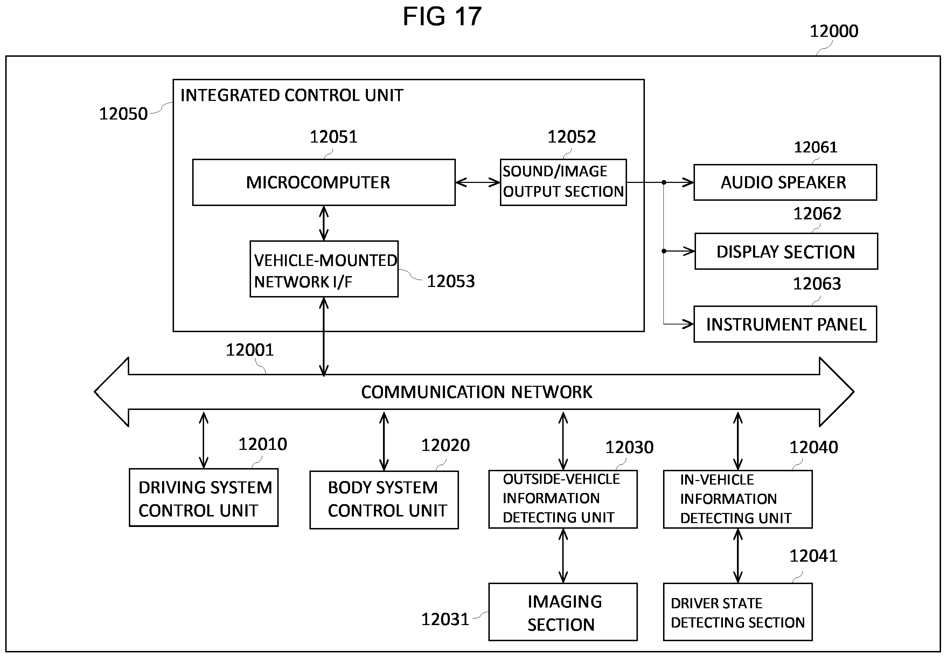

FIG. 17 is a block diagram depicting an example of schematic configuration of a vehicle control system as an example of a system to which the technology according to an embodiment of the present disclosure can be applied.

The vehicle control system 12000 includes a plurality of electronic control units connected to each other via a communication network 12001. In the example depicted in FIG. 17, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 imaging an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 may be or may include an image sensor assembly or a solid-state imaging device implementing a CDMA readout method according to the embodiments of the present disclosure. The light received by the imaging section 12031 may be visible light, or may be invisible light such as infrared rays or the like.

The in-vehicle information detecting unit 12040 detects information about the inside of the vehicle and may be or may include an image sensor assembly or a solid-state imaging device implementing a CDMA readout method according to the embodiments of the present disclosure. The in-vehicle information detecting unit 12040 is, for example, connected with a driver state detecting section 12041 that detects the state of a driver. The driver state detecting section 12041, for example, includes a camera that includes the solid-stage imaging device and that is focused on the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automatic driving, which makes the vehicle to travel autonomously without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound or an image to an output device capable of visually or audible notifying information to an occupant of the vehicle or the outside of the vehicle. In the example of FIG. 17, an audio speaker 12061, a display section 12062, and an instrument panel 12063 are illustrated as the output device. The display section 12062 may, for example, include at least one of an on-board display or a head-up display.

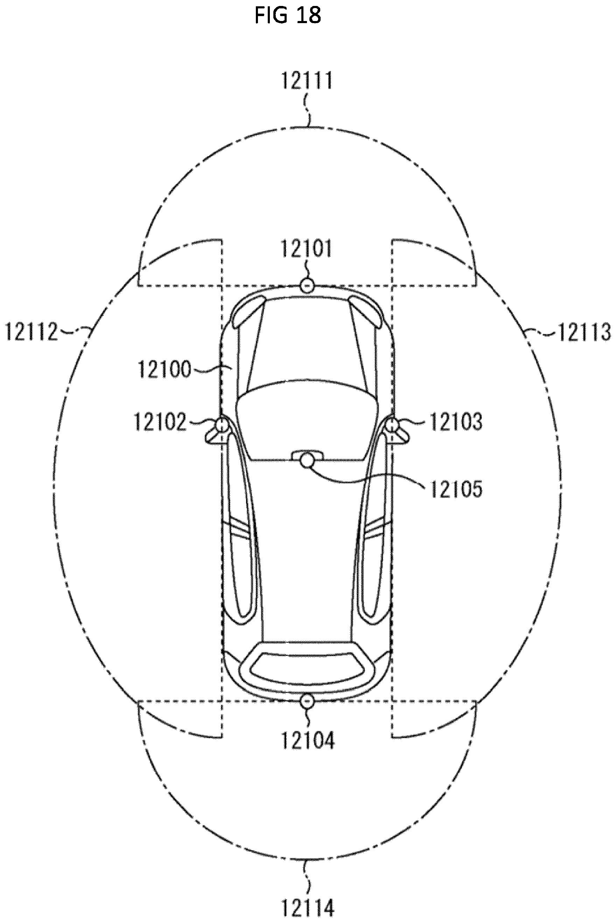

FIG. 18 is a diagram depicting an example of the installation position of the imaging section 12031, wherein the imaging section 12031 may include imaging sections 12101, 12102, 12103, 12104, and 12105.

The imaging sections 12101, 12102, 12103, 12104, and 12105 are, for example, disposed at positions on a front nose, side-view mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the side view mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 18 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the side view mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, imaging element having pixels for phase difference detection or may include a ToF module including an image sensor assembly or a solid-state imaging device implementing a CDMA readout method according to the embodiments of the present disclosure.

For example, the microcomputer 12051 can determine a distance to each three-dimensional object within the imaging ranges 12111 to 12114 and a temporal change in the distance (relative speed with respect to the vehicle 12100 on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automatic driving that makes the vehicle travel autonomously without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

The example of the vehicle control system to which the technology according to an embodiment of the present disclosure is applicable has been described above. By applying the an image sensor assembly or a solid-state imaging device implementing a CDMA readout method according to the embodiments of the present disclosure, the sensors have lower power consumption and better signal-to-noise ratio.

Additionally, embodiments of the present technology are not limited to the above-described embodiments, but various changes can be made within the scope of the appended claims.

The solid-state imaging device according to the present disclosure may be any device used for analyzing and/or processing radiation such as visible light, infrared light, ultraviolet light, and X-rays. For example, the solid-state imaging device may be any electronic device in the field of traffic, the field of home appliances, the field of medical and healthcare, the field of security, the field of beauty, the field of sports, the field of agriculture, the field of image reproduction or the like.

Specifically, in the field of image reproduction, the solid-state imaging device may be a device for capturing an image to be provided for appreciation, such as a digital camera, a smart phone, or a mobile phone device having a camera function. In the field of traffic, for example, the solid-state imaging device may be integrated in an in-vehicle sensor that captures the front, rear, peripheries, an interior of the vehicle, etc. for safe driving such as automatic stop, recognition of a state of a driver, or the like, in a monitoring camera that monitors traveling vehicles and roads, or in a distance measuring sensor that measures a distance between vehicles or the like.

In the field of home appliances, the solid-state imaging device may be integrated in any type of sensor that can be used in devices provided for home appliances such as TV receivers, refrigerators, and air conditioners to capture gestures of users and perform device operations according to the gestures. Accordingly the solid-state imaging device may be integrated in home appliances such as TV receivers, refrigerators, and air conditioners and/or in devices controlling the home appliances. Furthermore, in the field of medical and healthcare, the solid-state imaging device may be integrated in any type of sensor, e.g. a solid-state image device, provided for use in medical and healthcare, such as an endoscope or a device that performs angiography by receiving infrared light.

In the field of security, the solid-state imaging device can be integrated in a device provided for use in security, such as a monitoring camera for crime prevention or a camera for person authentication use. Furthermore, in the field of beauty, the solid-state imaging device can be used in a device provided for use in beauty, such as a skin measuring instrument that captures skin or a microscope that captures a probe. In the field of sports, the solid-state imaging device can be integrated in a device provided for use in sports, such as an action camera or a wearable camera for sport use or the like. Furthermore, in the field of agriculture, the solid-state imaging device can be used in a device provided for use in agriculture, such as a camera for monitoring the condition of fields and crops.

## Claims

1. A solid state imaging device, comprising:
a plurality N of pixel columns (31), wherein each pixel column (31) comprises a number M of pixel circuits (100), wherein each pixel circuit (100) is configured to generate a pixel signal containing pixel illumination information and output a non-inverted pixel signal or an inverted pixel signal in dependence on a voltage level of at least one row encoding signal;
a plurality N of column readout circuits (20), wherein each column readout circuit (20) is associated with a respective pixel column and configured to receive a column signal obtained by superposition of the non-inverted pixel signals and the inverted pixel signals output by the pixel circuits (100) on a data signal line shared by the pixel circuits of the respective pixel column into a digital column value;
an encoding unit (16) configured to generate the row encoding signals according to a binary spreading code matrix with a number L of code words with a code length L, wherein the code length L is equal to or smaller than the number M of pixel circuits (100) per pixel column (31); and
a number N of digital blocks (28), wherein each digital block (28) is configured to receive a set of the digital column values from one of the column readout circuits (20) and to decode the set of digital column values by using the binary spreading code matrix, wherein the number of digital column values per set is equal to the code length L of the binary spreading code matrix.

2. The solid state imaging device according to claim 1,
wherein the binary spreading code matrix includes a square matrix with a code length L equal to the number M of pixel circuits (100) per pixel column (31).

3. The solid state imaging device according to claim 1,
wherein the binary spreading code matrix includes a square matrix with a code length L less than the number M of pixel circuits (100) per pixel column (31).

4. The solid state imaging device according to claim 1,
wherein the encoding unit (16) is configured to change between a first encoding mode and a second encoding mode in response to an encoder control signal, wherein in the first encoding mode the encoding unit (16) uses a first binary spreading code matrix with a code length L equal to the number M of pixel circuits (100) per pixel column (31), and wherein in the second encoding mode the encoding unit (16) uses a second binary spreading code matrix with a code length L less than the number M of pixel circuits (100) per pixel column (31).

5. The solid state imaging device according to any of claims 1 to 4,
wherein each column readout circuit (20) is configured to receive one pixel column signal obtained by superposition of the non-inverted pixel signals and the inverted pixel signals output by the pixel circuits (100) of one pixel column (31).

6. The solid state imaging device according to any of claims 1 to 5,
wherein each of the pixel circuits (100) comprises a signal inverting circuit (150) configured to output one of the non-inverted pixel signal and the inverted pixel signal in dependence on a voltage level of one row encoding signal or in dependence of voltage levels of two row encoding signal.

7. The image sensor array according to claim 6,
wherein each of the pixel circuits (100) comprises an output transistor (103) electrically connectable with an input of the column readout circuit (20) associated with the pixel circuit (100), and wherein the signal inverting circuit (150) of the pixel circuit (100) is configured to control a signal direction of the output transistor (103) in dependence on the voltage level of the row encoding signal or in dependence of the voltage levels of the two row encoding signals.

8. The solid state imaging device according to any of claims 6 to 7,
wherein the signal inverting circuit (150) is configured to connect a first source/drain of the output transistor (103) with a positive supply voltage rail (198) and a second source/drain of the output transistor (103) with an input of the column readout circuit (20) in a first state, to connect the first source/drain with the input of the column readout circuit (20) and the second source/drain with a negative supply voltage rail (199) in a second state, and to change between the first state and the second state in dependence on the voltage level of the row encoding signal or in dependence of the voltage levels of the two row encoding signals.

9. The solid state imaging device according to any of claims 6 to 8,
wherein the signal inverting circuit (150) comprises a first switch element (151) between the first source/drain of the output transistor (103) and the positive supply voltage rail (198), a second switch element (152) between the second source/drain of the output transistor (103) and the input of the column readout circuit (20), a third switch element (153) between the first source/drain and the input of the column readout circuit (20), and a fourth switch element (154) between the second source/drain and a negative supply voltage rail (199), wherein turn-on and turn-off of the first and second switch elements (151, 152) are controllable by a first row encoding signal, and wherein turn-on and turn-off of the third and fourth switch elements (151, 152) are controllable by a second row encoding signal.

10. The solid state imaging device according to any of claims 6 to 9, further comprising:
a first constant current circuit (221) electrically connected between the input of the column readout circuit (20) and the positive supply voltage rail (198) and a second constant current circuit (222) electrically connected between the input of the column readout circuit (20) and a negative supply voltage rail (199).

11. The solid state imaging device according to any of claims 6 to 10, further comprising: booster circuits (160) configured to control a reference potential for control inputs of the output transistors (103).

12. A method of operating a solid state imaging device according to any of claims 1 to 11, the method comprising:
applying sequentially the number L of code words of the binary spreading code matrix to pixel columns (31) of the two-dimensional pixel array (11), wherein the code words have a code length L, wherein each code word is applied to some or all of the pixel columns (31) simultaneously, wherein each bit of a code word is applied to a different pixel row (32), and wherein depending on an element value of the binary spreading code matrix received by the pixel circuit (100), the pixel circuit (100) outputs a non-inverted pixel signal or an inverted pixel signal;
converting the pixel signals output by the pixel circuits (100) of the same pixel column (31) into a single column signal by superposition of the non-inverted pixel signals and the inverted pixel signals;
converting the column signals into digital column values for each pixel column; storing a number M of digital column values for each pixel column (32); and
decoding the stored digital column values for each pixel column (32) by using the binary spreading code matrix.

## Patentansprüche

1. Festkörperbildgebungsvorrichtung, umfassend:
eine Vielzahl N von Pixelspalten (31), wobei jede Pixelspalte (31) eine Anzahl M von Pixelschaltungen (100) umfasst, wobei jede Pixelschaltung (100) konfiguriert ist, um ein Pixelsignal zu erzeugen, das Pixelbeleuchtungsinformationen enthält, und ein nicht-invertiertes Pixelsignal oder ein invertiertes Pixelsignal in Abhängigkeit von einem Spannungspegel mindestens eines Zeilencodierungssignals auszugeben;
eine Vielzahl N von Spaltenausleseschaltungen (20), wobei jede Spaltenausleseschaltung (20) einer jeweiligen Pixelspalte zugeordnet ist und konfiguriert ist, um ein Spaltensignal zu empfangen, das durch Überlagerung der nicht-invertierten Pixelsignale und der invertierten Pixelsignale erhalten wird, die von den Pixelschaltungen (100) auf einer Datensignalleitung ausgegeben werden, die von den Pixelschaltungen der jeweiligen Pixelspalte geteilt wird, in einen digitalen Spaltenwert;
eine Codierungseinheit (16), die konfiguriert ist, um die Zeilencodierungssignale gemäß einer binären Spreizcode-Matrix mit einer Anzahl L von Codewörtern mit einer Codelänge L zu erzeugen, wobei die Codelänge L gleich oder kleiner als die Anzahl M von Pixelschaltungen (100) pro Pixelspalte (31) ist; und
eine Anzahl N von digitalen Blöcken (28), wobei jeder digitale Block (28) konfiguriert ist, um einen Satz der digitalen Spaltenwerte von einer der Spaltenausleseschaltungen (20) zu empfangen und den Satz von digitalen Spaltenwerten unter Verwenden der binären Spreizcode-Matrix zu decodieren, wobei die Anzahl der digitalen Spaltenwerte pro Satz gleich der Codelänge L der binären Spreizcode-Matrix ist.

2. Festkörperbildgebungsvorrichtung nach Anspruch 1,
wobei die binäre Spreizcode-Matrix eine quadratische Matrix mit einer Codelänge L gleich der Anzahl M von Pixelschaltungen (100) pro Pixelspalte (31) einschließt.

3. Festkörperbildgebungsvorrichtung nach Anspruch 1,
wobei die binäre Spreizcode-Matrix eine quadratische Matrix mit einer Codelänge L einschließt, die kleiner ist als die Anzahl M von Pixelschaltungen (100) pro Pixelspalte (31).

4. Festkörperbildgebungsvorrichtung nach Anspruch 1,
wobei die Codierungseinheit (16) konfiguriert ist, um zwischen einem ersten Codierungsmodus und einem zweiten Codierungsmodus als Reaktion auf ein Codierersteuersignal zu wechseln, wobei in dem ersten Codierungsmodus die Codierungseinheit (16) eine erste binäre Spreizcode-Matrix mit einer Codelänge L gleich der Anzahl M von Pixelschaltungen (100) pro Pixelspalte (31) verwendet, und wobei in dem zweiten Codierungsmodus die Codierungseinheit (16) eine zweite binäre Spreizcode-Matrix mit einer Codelänge L kleiner als die Anzahl M von Pixelschaltungen (100) pro Pixelspalte (31) verwendet.

5. Festkörperbildgebungsvorrichtung nach einem der Ansprüche 1 bis 4,
wobei jede Spaltenausleseschaltung (20) konfiguriert ist, um ein Pixelspaltensignal zu empfangen, das durch Überlagerung der nicht-invertierten Pixelsignale und der invertierten Pixelsignale erhalten wird, die von den Pixelschaltungen (100) einer Pixelspalte (31) ausgegeben werden.

6. Festkörperbildgebungsvorrichtung nach einem der Ansprüche 1 bis 5,
wobei jede der Pixelschaltungen (100) eine Signalinvertierschaltung (150) umfasst, die konfiguriert ist, um eines von dem nicht-invertierten Pixelsignal und dem invertierten Pixelsignal in Abhängigkeit von einem Spannungspegel eines Zeilencodierungssignals oder in Abhängigkeit von Spannungspegeln von zwei Zeilencodierungssignalen auszugeben.

7. Bildsensoranordnung nach Anspruch 6,
wobei jede der Pixelschaltungen (100) einen Ausgangstransistor (103) umfasst, der elektrisch mit einem Eingang der Spaltenausleseschaltung (20) verbindbar ist, die der Pixelschaltung (100) zugeordnet ist, und wobei die Signalinvertierschaltung (150) der Pixelschaltung (100) konfiguriert ist, um eine Signalrichtung des Ausgangstransistors (103) in Abhängigkeit von dem Spannungspegel des Zeilencodierungssignals oder in Abhängigkeit von den Spannungspegeln der zwei Zeilencodierungssignale zu steuern.

8. Festkörperbildgebungsvorrichtung nach einem der Ansprüche 6 bis 7,
wobei die Signalinvertierschaltung (150) konfiguriert ist, um einen ersten Source/Drain des Ausgangstransistors (103) mit einer positiven Versorgungsspannungsschiene (198) und einen zweiten Source/Drain des Ausgangstransistors (103) mit einem Eingang der Spaltenausleseschaltung (20) in einem ersten Zustand zu verbinden, um den ersten Source/Drain mit dem Eingang der Spaltenausleseschaltung (20) und den zweiten Source/Drain mit einer negativen Versorgungsspannungsschiene (199) in einem zweiten Zustand zu verbinden, und um zwischen dem ersten Zustand und dem zweiten Zustand in Abhängigkeit von dem Spannungspegel des Zeilencodierungssignals oder in Abhängigkeit von den Spannungspegeln der zwei Zeilencodierungssignale zu wechseln.

9. Festkörperbildgebungsvorrichtung nach einem der Ansprüche 6 bis 8,
wobei die Signalinvertierschaltung (150) ein erstes Schaltelement (151) zwischen dem ersten Source/Drain des Ausgangstransistors (103) und der positiven Versorgungsspannungsschiene (198), ein zweites Schaltelement (152) zwischen dem zweiten Source/Drain des Ausgangstransistors (103) und dem Eingang der Spaltenausleseschaltung (20), ein drittes Schaltelement (153) zwischen dem ersten Source/Drain und dem Eingang der Spaltenausleseschaltung (20), und ein viertes Schaltelement (154) zwischen dem zweiten Source/Drain und einer negativen Versorgungsspannungsschiene (199) umfasst, wobei das Ein- und das Ausschalten des ersten und des zweiten Schaltelements (151, 152) durch ein erstes Zeilencodierungssignal steuerbar sind, und wobei das Ein- und das Ausschalten des dritten und des vierten Schaltelements (151, 152) durch ein zweites Zeilencodierungssignal steuerbar sind.

10. Festkörperbildgebungsvorrichtung nach einem der Ansprüche 6 bis 9, ferner umfassend:
eine erste Konstantstromschaltung (221), die elektrisch zwischen dem Eingang der Spaltenausleseschaltung (20) und der positiven Versorgungsspannungsschiene (198) verbunden ist, und eine zweite Konstantstromschaltung (222), die elektrisch zwischen dem Eingang der Spaltenausleseschaltung (20) und einer negativen Versorgungsspannungsschiene (199) verbunden ist.

11. Festkörperbildgebungsvorrichtung nach einem der Ansprüche 6 bis 10, ferner umfassend:
Boosterschaltungen (160), die konfiguriert sind, um ein Referenzpotential für Steuereingänge der Ausgangstransistoren (103) zu steuern.

12. Verfahren zum Betreiben einer Festkörperbildgebungsvorrichtung nach einem der Ansprüche 1 bis 11, wobei das Verfahren umfasst:
sequenzielles Anwenden der Anzahl L von Codewörtern der binären Spreizcode-Matrix auf Pixelspalten (31) des zweidimensionalen Pixelarrays (11), wobei die Codewörter eine Codelänge L haben, wobei jedes Codewort auf einige oder alle der Pixelspalten (31) gleichzeitig angewendet wird, wobei jedes Bit eines Codeworts auf eine andere Pixelzeile (32) angewendet wird, und wobei abhängig von einem Elementwert der binären Spreizcode-Matrix, der von der Pixelschaltung (100) empfangen wird, die Pixelschaltung (100) ein nicht-invertiertes Pixelsignal oder ein invertiertes Pixelsignal ausgibt;
Umwandeln der von den Pixelschaltungen (100) derselben Pixelspalte (31) ausgegebenen Pixelsignale in ein einziges Spaltensignal durch Überlagerung der nicht-invertierten Pixelsignale und der invertierten Pixelsignale;
Umwandeln der Spaltensignale in digitale Spaltenwerte für jede Pixelspalte; Speichern einer Anzahl M von digitalen Spaltenwerten für jede Pixelspalte (32); und Decodieren der gespeicherten digitalen Spaltenwerte für jede Pixelspalte (32) unter Verwenden der binären Spreizcode-Matrix.

## Revendications

1. Dispositif d'imagerie à semi-conducteurs, comprenant :
une pluralité N de colonnes de pixels (31), dans lequel chaque colonne de pixels (31) comprend un nombre M de circuits de pixels (100), dans lequel chaque circuit de pixel (100) est configuré pour générer un signal de pixel contenant des informations d'éclairage de pixel et sortir un signal de pixel non inversé ou un signal de pixel inversé en fonction d'un niveau de tension d'au moins un signal de codage de rangée ;
une pluralité N de circuits de lecture de colonne (20), dans lequel chaque circuit de lecture de colonne (20) est associé à une colonne de pixels respective et configuré pour recevoir un signal de colonne obtenu par superposition des signaux de pixels non inversés et des signaux de pixels inversés sortis par les circuits de pixels (100) sur une ligne de signal de données partagée par les circuits de pixels de la colonne de pixels respective en une valeur de colonne numérique ;
une unité de codage (16) configurée pour générer les signaux de codage de rangée selon une matrice de code d'étalement binaire avec un nombre L de mots de code avec une longueur de code L, dans lequel la longueur de code L est égale ou inférieure au nombre M de circuits de pixels (100) par colonne de pixels (31) ; et
un nombre N de blocs numériques (28), dans lequel chaque bloc numérique (28) est configuré pour recevoir un ensemble de valeurs de colonne numériques à partir de l'un des circuits de lecture de colonne (20) et pour décoder l'ensemble de valeurs de colonne numériques en utilisant la matrice de code d'étalement binaire, dans lequel le nombre de valeurs de colonne numériques par ensemble est égal à la longueur de code L de la matrice de code d'étalement binaire.

2. Dispositif d'imagerie à semi-conducteurs selon la revendication 1,
dans lequel la matrice de code d'étalement binaire comporte une matrice carrée avec une longueur de code L égale au nombre M de circuits de pixels (100) par colonne de pixels (31).

3. Dispositif d'imagerie à semi-conducteurs selon la revendication 1,
dans lequel la matrice de code d'étalement binaire comporte une matrice carrée avec une longueur de code L inférieure au nombre M de circuits de pixels (100) par colonne de pixels (31).

4. Dispositif d'imagerie à semi-conducteurs selon la revendication 1,
dans lequel l'unité de codage (16) est configurée pour passer d'un premier mode de codage à un second mode de codage en réponse à un signal de commande de codeur, dans lequel, dans le premier mode de codage, l'unité de codage (16) utilise une première matrice de code d'étalement binaire avec une longueur de code L égale au nombre M de circuits de pixels (100) par colonne de pixels (31), et dans lequel, dans le second mode de codage, l'unité de codage (16) utilise une seconde matrice de code d'étalement binaire avec une longueur de code L inférieure au nombre M de circuits de pixels (100) par colonne de pixels (31).

5. Dispositif d'imagerie à semi-conducteurs selon l'une quelconque des revendications 1 à 4,
dans lequel chaque circuit de lecture de colonne (20) est configuré pour recevoir un signal de colonne de pixels obtenu par superposition des signaux de pixels non inversés et des signaux de pixels inversés sortis par les circuits de pixels (100) d'une colonne de pixels (31).

6. Dispositif d'imagerie à semi-conducteurs selon l'une quelconque des revendications 1 à 5,
dans lequel chacun des circuits de pixels (100) comprend un circuit d'inversion de signal (150) configuré pour sortir l'un parmi le signal de pixel non inversé et le signal de pixel inversé en fonction d'un niveau de tension d'un signal de codage de rangée ou en fonction de niveaux de tension de deux signaux de codage de rangée.

7. Réseau de capteurs d'image selon la revendication 6,
dans lequel chacun des circuits de pixels (100) comprend un transistor de sortie (103) pouvant être connecté électriquement à une entrée du circuit de lecture de colonne (20) associée au circuit de pixel (100), et dans lequel le circuit d'inversion de signal (150) du circuit de pixel (100) est configuré pour commander une direction de signal du transistor de sortie (103) en fonction du niveau de tension du signal de codage de rangée ou en fonction des niveaux de tension des deux signaux de codage de rangée.

8. Dispositif d'imagerie à semi-conducteurs selon l'une quelconque des revendications 6 à 7,
dans lequel le circuit d'inversion de signal (150) est configuré pour connecter une première source/drain du transistor de sortie (103) avec un rail de tension d'alimentation positif (198) et une seconde source/drain du transistor de sortie (103) avec une entrée du circuit de lecture de colonne (20) dans un premier état, pour connecter la première source/drain avec l'entrée du circuit de lecture de colonne (20) et la seconde source/drain avec un rail de tension d'alimentation négative (199) dans un second état, et pour passer du premier état au second état en fonction du niveau de tension du signal de codage de rangée ou en fonction des niveaux de tension des deux signaux de codage de rangée.

9. Dispositif d'imagerie à semi-conducteurs selon l'une quelconque des revendications 6 à 8,
dans lequel le circuit d'inversion de signal (150) comprend un premier élément de commutation (151) entre la première source/drain du transistor de sortie (103) et le rail de tension d'alimentation positive (198), un deuxième élément de commutation (152) entre la seconde source/drain du transistor de sortie (103) et l'entrée du circuit de lecture de colonne (20), un troisième élément de commutation (153) entre la première source/drain et l'entrée du circuit de lecture de colonne (20), et un quatrième élément de commutation (154) entre la seconde source/drain et un rail de tension d'alimentation négative (199), dans lequel l'activation et la désactivation des premier et deuxième éléments de commutation (151, 152) peuvent être commandées par un premier signal de codage de rangée, et dans lequel l'activation et la désactivation des troisième et quatrième éléments de commutation (151, 152) peuvent être commandés par un second signal de codage de rangée.

10. Dispositif d'imagerie à semi-conducteurs selon l'une quelconque des revendications 6 à 9, comprenant en outre :
un premier circuit à courant constant (221) connecté électriquement entre l'entrée du circuit de lecture de colonne (20) et le rail de tension d'alimentation positif (198) et un second circuit à courant constant (222) connecté électriquement entre l'entrée du circuit de lecture de colonne (20) et un rail de tension d'alimentation négative (199).

11. Dispositif d'imagerie à semi-conducteurs selon l'une quelconque des revendications 6 à 10, comprenant en outre :
des circuits d'amplification (160) configurés pour commander un potentiel de référence pour des entrées de commande des transistors de sortie (103).

12. Procédé de fonctionnement d'un dispositif d'imagerie à semi-conducteur selon l'une quelconque des revendications 1 à 11, le procédé comprenant :
l'application séquentielle du nombre L de mots de code de la matrice de code d'étalement binaire aux colonnes de pixels (31) du réseau de pixels bidimensionnel (11), dans lequel les mots de code ont une longueur de code L, dans lequel chaque mot de code est appliqué à certaines ou à toutes les colonnes de pixels (31) simultanément, dans lequel chaque bit d'un mot de code est appliqué à une rangée de pixel (32) différente, et dans lequel, en fonction d'une valeur d'élément de la matrice de code d'étalement binaire reçue par le circuit de pixel (100), le circuit de pixel (100) sort un signal de pixel non inversé ou un signal de pixel inversé ;
la conversion des signaux de pixels sortis par les circuits de pixels (100) de la même colonne de pixels (31) en un signal de colonne unique par superposition des signaux de pixels non inversés et des signaux de pixels inversés ;
la conversion des signaux de colonne en valeurs de colonne numériques pour chaque colonne de pixels ; le stockage d'un nombre M de valeurs de colonnes numériques pour chaque colonne de pixels (32) ; et le décodage des valeurs de colonne numérique stockées pour chaque colonne de pixels (32) en utilisant la matrice de code d'étalement binaire.
